# EUROPEAN PATENT APPLICATION

(11) **EP 3 561 617 A1**
(43) Date of publication of application: **30.10.2019**
(21) Application number: 18168967.0
(22) Date of filing: 24.04.2018
(51) Int. Cl.: G05B 19/042

(54) **AUTOMATION COMPONENT CONFIGURATION**

(71) Applicant: Siemens Aktiengesellschaft, 80333 München (DE)
(72) Inventor: Barletta, Michele, 91074 Herzogenaurach (DE); Christ, Jochen, 90427 Nürnberg (DE); Kröselberg, Dirk, 80469 München (DE); Limmer, Tobias, 80797 München (DE)

(57) **Abstract**

The invention refers to a method to provide automation component configurations (ACC1,...,ACCn) for automation components (C1, ..., Cn) of an industrial automation project (PRJ). The method especially focuses on security aspects of automation projects (PRJ). The present invention further relates to an engineering system (ES) for engineering, programming and/or configuring industrial automation components and particularly security related features of automation components (C1, ..., Cn) in automation projects. The invention further relates to automation components (C1,...,Cn), automation component databases (DB) and receiving tools (VT, CT, MT). A computer program and a data carrier signal are further provided.

## Description

The invention refers to a method to facilitate providing automation component configurations for automation components of an industrial automation project. The method especially focuses on security aspects of automation projects.

The present invention further relates to an engineering system for engineering, programming and/or configuring industrial automation components and particularly engineering, programming and/or configuring security related features of automation components in automation projects. The invention further relates to automation components, automation component databases and receiving tools. A computer program and a data carrier signal are further provided.

Industrial engineering systems, also known as project engineering tools for industrial application, may be used for solution-design and -implementation, as well as later operation and/or management processes. Solutions are to be understood as industrial solutions for process and or discrete industries.

The engineering of an automation project (e.g. for a plant) usually comprises one or more of the following: determining the required functionality in the project, determining what components are needed to offer this functionality, allocating functionality and an actual physical position to the components in the plant, allocate communication structures to the components (e.g. what components are allowed to communicate with what other components and how they communicate, what actually is the purpose of the component), etc.

An automation project correlates with a real project for e.g. setting up a new production/manufacturing line in a new or existing industrial plant or a new or existing process plant.

Some of many examples in which such automation projects are set up, are the manufacturing of vehicles in the automotive industry, producing electronics, producing food and beverage products and many more.

In these applications the engineering system is used for generating one or more automation component configurations in the context of an industrial automation project. The industrial automation project can be e.g. factory automation projects, process-industry automation projects and any further automation projects in an industrial context.

An automation component in this application can be a hardware component and/or a software component or a combination of both for use in the above automation project. Automation components include but are not limited to: programmable logic controllers (PLCs), I/O modules, industrial communication devices, industrial networking components, sensors, actors, drives and other industrial devices commonly used in the process or automation industry. Software components which share hardware with other components are also configurable by the method and/or the engineering system.

In industrial environments, e.g., industrial automation control, SCADA, or energy automation, automation solutions are typically composed of a heterogeneous range of system components (e.g., embedded devices, controllers, network equipment, standard-OS systems and applications). Also, such solutions are divided in several zones that are separated into multiple sub-networks at the network (logical) level or through physical separation like several buildings. When such solutions are designed, implemented and taken into operation, properties of the deployed solution components can be described in standardized formats (e.g., DIN EN 61360, see the database under Database: http://std.iec.ch/iec61360, or the ECl@ss object format. However these formats focus just on hardware properties of the components.

The problem to be solved with this invention is to facilitate the implementation of security parameter settings in an engineering project. In particular high and solution wide security settings in an engineering project may be achieved.

To solve this problem a method to provide automation component configurations for automation components of an industrial automation project, is proposed. The method comprising a first step of determining automation component description data comprising one or more functionality parameters for configuring functionality of the one or more automation components and one or more security parameters for configuring security functions of the one or more automation components.

The method comprising a second step of determining based on the industrial automation project, a functionality parameter setting for the one or more functionality parameters and a security parameter setting for the one or more security parameters.

The invention simplifies the automated implementation and verification of one or more security measures in an automation project to reduce the risk of misconfiguration and the resulting security vulnerabilities significantly and ensures the consequent enhancement of functionality data with security data. It should be understood that the first and the second step of determining may be performed in the order as presented above or may be performed either in parallel or simultaneously to one another. Also, it should be understood that the first and the second step of determining may be performed in a coordinated manner such as to form a single coordinated step.

The method is very effective when multiple automation component configurations are provided for multiple automation components. In an automation project, in particular of an industrial scale, usually there are multiple automation components that have to be configured. The method proposed can be carried out by an engineering system or a group of components that form an engineering system. The automation component configurations are used to configure actual components and devices that interact with the physical world. The method is also applicable when every component has to be configured with security parameter settings.

One or more functionality parameters may define one or more functionalities of an automation component, preferably all of the functionalities of an automation component. One or more functionality parameter settings may configure the respective one or more functionalities. The functionality parameters can include but are not limited to: control functions, IO mappings, startup definitions, error handling, monitoring functionality, condition monitoring, controlling, and further functions, that are common in industrial automation projects. The required functionality of one or more automation components in an automation project depends on their actual task and their surrounding (including neighboring components with which they are supposed to cooperate and/or interact), communication capabilities and the like. A functionality can include one or more programs that are to be executed on one or more automation components.

One or more security parameters may define a security function of an automation component, whereas one or more security parameter settings configure the security functions, preferably all of the security functions of an automation component. The one or more security parameters may thus describe one or more security functions and can include but are not limited to: supported or active TCP/UDP communication ports, communication protocols, configured accounts for users (system or user accounts, operating system accounts, web server accounts, database accounts, etc.), supported security functions (logging of critical events, separation of zones implemented in the solution, etc.) as well as applied hardening measures for the components and any further security measures. Security parameters can also be defined as a "no security features available" parameter - which later on can be evaluated to show a project or system level security measure or even disqualify a certain automation component for a certain higher security task.

Generally, one or more parameters and their settings may be represented by configuration data which is applicable to the automation components in automation project. An automation component may have a limited number of parameter settings available, e.g. below 50. Parameter setting can be binary configuration selections of functions, such as enabling or disabling a certain functionality of the component.

Automation component description data can be an existing description of the component, which e.g. is part of a component library in an engineering system, mostly available from the manufacturer of the components or the provider of the engineering system. The automation component description data can already comprise a basic set of pre-defined parameter settings. Automation component description data can be in the form of a digital model of the automation component, in current development digital twins of the automation component are provided more and more. Automation component description data can also be a model of one or more automation components that are used in an automation project, e.g. a digital model or a digital twin of an automation component with a predefined default configuration (default parameter settings). A default configuration can be a set of parameter settings that can be applied to a plurality of different automation projects. Parameters generally can be preconfigured building blocks for standard use cases and also can be empty templates that are completely manually configurable e.g. in a later stage of the automation project.

A data exchange between the entity generating the project level security data and/or automation component configurations and receiving tools/components or other devices preferably bases on one or more standardized data formats. For functionality such data formats and/or databases are e.g. known form IEC 61360 or ECl@ss. Hence, such a data format and/or a database can be enhanced by security data according to an aspect of the current invention.

The one or more functionality parameter settings and/or one or more security parameter settings are generated based on the automation project. This can be achieved by linking the information stored and/or directly entered in the automation project to the one or more functionality parameters and one or more security parameters actually used in the one or more automation components.

The invention therefore allows strict generation of one or more automation component configurations with the use of automation component description data in combination with security-related data, including security parameter settings, from early stages of the automation project on. When the automation project is set up, the security parameters may automatically provided for each component that is added to the automation project. The one or more security parameters can be implemented in one or more automation projects and furthermore they can be verified and analyzed for vulnerabilities in the solution by further components. Possible application of the security parameters are: input for the actual security configuration of automation components, security testing and security threat and/or risk analysis.

In general it is possible to provide security parameter settings for security parameters that are not directly applied to automation component itself. This can be the case for low-level automation components, which do not implement any security features themselves, but need to be classified according to a security level or a security zone. This allows extending security features onto components that do not support security features themselves.

In a further embodiment the method comprises a third step of providing one or more automation component configurations comprising the determined functionality parameter settings and the determined security parameter settings. Providing can comprise one or more of saving the configurations to a database, forwarding the configurations to a receiving tool, directly configuring automation components, and further steps.

In a further embodiment the first step further comprises retrieving one or more default functionality parameter settings and/or one or more default security parameter settings and the second step of determining further being based on the one or more default functionality parameter settings and/or the default one or more security parameter settings. Default security parameter settings can be default security settings, such as enabling standard encryption for communication, access control settings or the deactivation of certain unsecure ports in communication by default. Default functionality parameter settings can be preconfigured building blocks for standard use cases, e.g. the control of a motor, reading in sensors, establishing connections between different components. It is possible to retrieve the default functionality parameter settings and/or the default security parameter settings from an automation component database. Additionally or alternatively a generation component in the engineering system or elsewhere could generate default functionality parameters and/or default security parameters. The engineering system then could choose to generate certain parameters itself and retrieve them from the generation component or retrieve the default parameters from the automation component database. Using or even enforcing default security settings greatly improves the security of the whole automation system, in combination with default functionality settings improving the productivity of the overall engineering process.

Retrieving default parameter settings can be implemented by an engineering system generating default settings according to definable criteria. The default parameter settings can further be stored in a central or decentral automation database, which also can be allocated in a remote storage, such as a cloud platform, such as MindSphere from SIEMENS AG, from where said default parameter settings may be retrieved. Parts of the automation database can be stored or buffered in the engineering system for higher-performance access. Retrieving comprises passively receiving or actively polling data.

The default parameter settings can be used unaltered or can be adjusted according to and/or based on the automation project and the further use of the component or components which will be configured with the automation component configurations.

Some parameters will have impact on both: functionality configuration and security configuration, therefore some parameters can occur as a security parameter as well as a functionality parameter in an automation component configuration. Such dependencies can be managed, visualized and/or used much more efficiently with the proposed structure. An example for such a dependency can be a communication protocol with real-time properties. Usually, a communication protocol with real-time requirements may not achieve a security level as high as a communication protocol without real-time requirements. Thus, a real-time communication protocol may have a security level that due to its real time properties is lower than a security level of a communication protocol without real-time requirements. This security level then can be included in the engineering of the zone containing the lower security communication in the automation system. Those functionality parameters with inherent security properties can then be dealt with by additional security features, if needed, in those cases.

The engineering system can provide the generated functionality and security parameter settings via (e.g. encapsulated in) one or more automation component configurations to further components.

In a further embodiment the determined security parameters are combined to a set of project-level security data for the respective automation project. Certain project data and/or functionality parameters can be included in the project-level security data for further analysis or optimization. The set of project-level security data provides security data at a solution level, such as attributes for a network used in the whole solution or physical zones with different security attributes, which may influence security attributes in the system level as well. An example is a solution wide protection level that defines specific security attributes that must be met by the single automation components or single groups of automation components. The project level security data can be arranged intelligently in a structured manner to further carry out optimization processes, such as reducing the number of high-security components or enhancing security by providing a limited number of more secure components. Components can have configurable security classes and may be used in different security zones.

In a further embodiment the automation component configurations and/or the project-level security data are provided to a receiving tool, preferably a configuration tool, a verification tool and/or a monitoring tool. The receiving tool can be a component, a standalone hardware device, a tool in a shared device that is configured and/or operative to receive and further process the automation component configurations and/or the project level security data.

Configuration tools are operative to configure the automation components with the provided automation component configurations. It can be a part of the engineering system or a standalone solution.

Verification tools are tools that are operative to verify a correct implementation and operation of security functions and features. The engineering system providing the automation component configurations to a verification tool enables a more efficient approach to the necessary verifications of the security requirements of automation projects. In a more strict approach only verified automation component configurations are allowed to be provided to the automation component directly. The verification tool can be a part of a bigger engineering environment or can be integrated into the engineering system as a module. The verification tool can be a security only verification tool or a security and functionality verification tool in combination. Later on the verification tool can send back configuration or verification results to the engineering system to allow further optimization of security data or automated reporting of verification results and detected deviations (e.g. deactivated security features in a high security zone).

Monitoring tools are operative to money toward the provided data/configurations and to report and or signal changes that are required in the configurations because of external issues, like security breaches, update requirements or near zero day exploits or internal issues because of change of production or change of optimization and/or security requirements. All of the above receiving tools can be implemented together on a single system or be combined in a way that is most suitable for the automation project.

Alternatively or additionally the automation component configurations can be provided directly to the automation components. This way a separate configuration tool is not necessary anymore and could be seen as part of an engineering system or superior entity. Nevertheless the automation component configurations provided by the engineering system can be separately used in a configuration tool anyways. This allows a high amount of flexibility in an automation project.

According to a further embodiment an automation component configuration is provided for each automation component or each group of related automation components, preferably each component in the automation project is provided with a component configuration enhanced with security parameters according to this invention. This way it is assured that all the automation components in the automation project are provided with a suitable automation component configuration in an efficient manner. The configuration directly affects the way the automation system interacts with the physical world. It is guaranteed that each of the one or more automation component configurations is provided with one or more security parameter settings and/or security information about the security parameter settings. This approach allows implementing a higher level of security, while allowing an efficient tracea-bility, monitoring and verification of security.

According to a further embodiment each of the one or more automation component configurations are determined based on security parameters in combination with at least one default security parameter. This step ensures that at least a basic security level can be achieved and no automation component can be engineered without security parameter settings. The possibility to declare components as not security relevant can be configured for certain components. Consequently for those components even a basic security configuration is not necessary. This can be the case in very low security zones or for components of very low importance. Nevertheless this configuration information of non security relevance still can be included in a project level security data, so it is known which components do not have a security configuration and therefore are not to be used in higher security zones, unless correctly configured with a higher security standard. Additionally or alternatively components without security configuration can only be used with another component that takes over security for the further component - e.g. a firewall, a networking device with packet filtering to protect the low security device from malicious packets and further security devices and or components.

In another embodiment the method comprises the step of evaluating the set of project-level security data of the automation project according to definable security criteria. Evaluating the project security data can result in reporting the current configuration and/or verification results back to the project tool (e.g. the engineering system) to allow further optimization of solution security configuration data. Depending on the general security requirements of the automation project those evaluations can be enhanced with further measures.

In a further embodiment, the method comprises the step of optimizing the set of project-level security data according to a definable project security level and/or definable security zones. Optimizing the project level security data can be realized by e.g. comparing the different parameter settings and identifying deviations from single automation components from the majority of automation components or from the global security level, which is set for this respective zone or this automation project. As a measure the identified deviations and can be reported or directly and/or automatically corrected by the engineering system. Another possibility is that different encryption standards are used and for the sake of efficiency a currently optimal (a reasonable compromise regarding speed and security) encryption standard for the automation project is chosen to ensure smooth operation of the automation components.

In a further embodiment, the method comprises structuring the automation component description data are according to a format comprising at least functionality data and security data. The advantage of such standardized component description data is the further applicability of the data and the compatibility among different components. Optimization processes are also simplified. An example of such data could be a database like known from IEC 61360 that is enhanced with security data according to the described invention.

In a further embodiment, the method comprises enriching the automation component description data with at least parts of the automation component configurations. This ensures that the configurations and the knowledge that was used to engineer a project can further be used in future projects or in other parts of the current project as a continuous improvement. This way the efficiency rises with further use of the proposed method. Additionally or alternatively the knowledge can be shared across an automation platform in bigger enterprises or even among conglomerates or standardization groups.

The problem is further solved by an engineering system for providing one or more automation component configurations for an industrial automation project by a method according to any one of the preceding claims, the engineering system being configured and/or operative to:
- in a first step determine automation component description data comprising one or more functionality parameters for configuring functionality of the one or more automation components and one or more security parameters for configuring security functions of the one or more automation components and
- in a second step determine, based on the industrial automation project, a functionality parameter setting for the one or more functionality parameters and a security parameter setting for the one or more security parameters. Such an engineering system can be provided on a PC, a central server infrastructure for all enterprise, as a web-based application and so on. The engineering system can comprise interfaces to contact and/or connect the automation components. The engineering system according to the invention simplifies a persistent configuration of automation components in a secure way. The engineering system further simplifies verification and configuration of the components. The engineering system can carry out or initiate any of the steps and embodiments of the method described in this invention.

The problem is further solved by an automation component being configured and/or operative to receive and/or retrieve automation component configurations and to apply functionality parameter settings and security parameter settings from the received automation component configuration. For these purposes the automation component can comprise an interface and a memory and further can be operative/configured to receive automation component configurations via the interface and apply them to the memory, further the possibility, that a CPU which can be part of the automation component or shared with other automation components executes the parameter settings received from the automation component configurations.

The automation component can be configured to notice by itself, that a new configuration is required and retrieves the configuration by itself. Once configured with the suitable automation component configuration, the automation component can be deployed in the factory or the process plant that is intended to be used in. Later on, when security measures have changed and/or have to be upgraded, the automation component configurations can be updated. This can be done by a push service in the automation network, e.g. initiated by the engineering system or any of the receiving tools.

The problem is further solved by an automation component database providing at least one or more of automation component description data and/or default functionality parameters and/or default security parameters according to the method described herein. Such a database can be part of or incorporate a component library stored locally, central or decentral e.g. in a cloud server system.

The problem is further solved by a receiving tool operative to receive and/or retrieve automation component configurations and/or project-level security data provided by a method according to the invention described herein, and to process the automation component configurations and/or project-level security data. The processing of the project-level security data can comprise evaluating single points of parameter settings and comparing them with security policies for certain security zones and security levels. Furthermore big scale security analysis with artificial intelligence is also possible when combining project-level security data of larger projects or multiple data for analysis purposes. Optimization can also take place, e.g. combining certain security features of lower-level automation devices in a higher-level automation device, with enough computation power to ensure an efficient infrastructure for security purposes.

In a preferred embodiment the receiving tool is operative to provide a result of processing one or more of the automation component configurations and/or project-level security data to the engineering system. When providing the results of processing the project level security data back to the engineering system future projects can be greatly simplified optimized and overall improved regarding security as well as functionality, projects that are already in place can be improved and optimized regarding security, or even secured against threats, that were unknown during the period of engineering.

According to the invention a computer program comprising instructions which, when the program is executed by a computer, cause the computer to provide automation component configurations for automation components of an industrial automation project, and further to carry out the method according to the invention is provided. A data carrier signal carrying the computer program described herein is also covered by this invention. All forms of data carrier signals according to the invention, such as downloads from the internet, intranet, USB drives, SD cards, and further known and future data carriers are covered by this invention.

Embodiments of the invention are now described, by way of example only, with reference to the accompanying drawings, of which:
- FIG 1: shows the general concept of the invention;
- FIG 2: shows an engineering system;
- FIG 3: shows an automation component;
- FIG 4: shows an automation project in relation with an industrial facility;
- FIG 5: shows an industrial facility with its security zones;
- FIG 6: shows an automation component database in interaction with an engineering system and
- FIG 7: shows a further embodiment of an automation component database and the data it is providing
- FIG 8: shows a further embodiment of an automation component database and the data it is providing
- FIG 9: shows three steps of an embodiment of the method according to the invention.

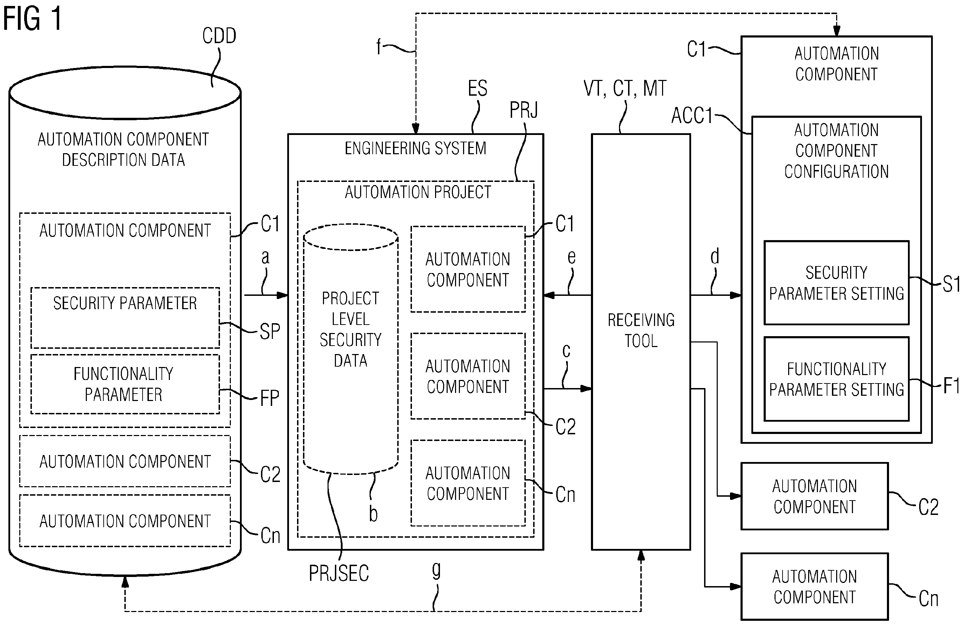

FIG 1 shows the general concept of the invention, which allows strictly applying security parameters and parameter settings during engineering. Automation component description data CDD is shown on the left for three solution components, in this case for automation components C1, C2 and Cn. The automation component description data CDD comprises least functionality parameters FP and security parameters SP. The automation component description data CDD therefore is enhanced according to the invention with security parameters SP, that can be configured with security parameter settings S1,...,Sn (not shown). The automation component C1 also comprises functionality parameters FP and their functionality parameter settings F1,...,Fn, that are not shown here for the sake of clarity. The available parameters and their settings are all data which are further useable or processable with a project tool, e.g. an engineering system ES as shown. The engineering system ES currently shows an automation project to be edited or engineered. The engineering system ES can create or retrieve, manage and/or optimize the security parameters SP and the security parameter settings S1,...,Sn respectively while using automation component description data CDD. As shown on the far right the automation component C1 is to be provided with an automation component configuration ACC1 further comprising security parameter setting S1 and functionality parameter setting F1. For the sake of clarity for automation components C2 and Cn their automation component configurations ACC2 and ACC3 are not shown but can be also created or engineered by the engineering system ES as described for the automation component configuration ACC1 for automation components C1.

As mentioned above, the automation project PRJ is currently loaded in the engineering system ES to generate automation component configuration ACC for three automation components C1, C2, Cn. The engineering system ES further can not only be used for a current automation project PRJ but to manage and optimize already created projects and their security parameter settings S1,...,Sn and functionality parameter settings F1,...,Fn to optimize future automation projects PRJ or to improve automation projects PRJ that are already in place. Furthermore the automation project shows project level security data PRJSEC, which comprises security information, e.g. parts of or complete security parameters SP and their settings S1,...,Sn, and further data related to security of the project PRJ, possibly including security data of all automation components C1,...,Cn to be used in the automation project PRJ.

The engineering system ES can also be linked to an exploit database where current security breaches are published, the engineering system ES being able to check all of its automation projects PRJ and their project level security data PRJSEC for necessary steps and apply measures to the automation projects PRJ accordingly. The applicable measures then can be verified in a verification tool VT or directly applied via a configuration tool CT or directly via the engineering system ES.

According to an embodiment, that is compatible with all other embodiments, including or removing features of the current invention and in more detail there can be the following steps, each respective to the small letters a-g:
Referring to (a): the automation component description data CDD used for project engineering and in project engineering systems ES are extended with security related data, security parameters SP required as input for security configurations, security testing, and/or security threat and risk analysis. Moreover the security parameters SP are automatically provided for and into the project tooling, in this case the engineering system ES. One possible implementation of the invention extends existing automation component description data formats and databases (e.g., DIN EN 61360 or ECl@ss) with security configuration data. This includes for example communication ports that are open by default and those that are supported in general.

Referring to (b): the engineering system ES not only provides configuration data in form of functionality parameters FP, but also combines and optimizes the component description data CDD in an intelligent way to generate project-level security data PRJSEC and descriptions from the automation component description data CDD by combining the security parameters SP relevant to the automation project to a set of project (or system) level security data PRJSEC. This ensures that security data at a solution level is available for further measures. As depicted here at an automation project PRJ level, attributes, such as parameters for network or physical zones, may influence security attributes in the system level as well. This accumulation of security attributes, data or parameters is shown as project level security data PRJSEC. An example is a solution-wide protection level, or multiple different security zones, that define specific security attributes that must be met by single systems. The security zones are exemplary defined according to the IEC62443 security standards framework (IEC62443-3-3 and IEC62443-3-2). As an example the project engineering tool, the engineering system ES, aggregates active ports and the configured IP addresses of the components, the automation components C1,...,Cn, in the solution, and can optimize the resulting list of data, e.g., by identifying communication relations and reducing the overall list's complexity. Those communication relations can then be enriched with security relevant data (encryption, security zones, ...) and be automatically be generated as communication graphs and shown on HMI systems to simplify security analysis and monitoring.

The tool can further optimize the data, for instance, by breaking it down to the several configured solution zones (these can be, for example, "security zones" defined according to the IEC62443 security standards framework - e.g. IEC62443-3-3 and IEC62443-3-2).

Furthermore, optimization can take into account the configuration of components that control the zone boundaries, like firewalls, and that allow communication (based on IP addresses and ports) only when allowed by the configured firewall rules. For component security data that comprise security tests (descriptions of specific security tests to be performed on components), the optimization can be that the test cases are aggregated and chosen based on a security level or protection level assigned to the solution, zone, or component itself. This allows to optimize the overall set of security tests (e.g., those that have to be performed later on during acceptance testing, or scheduled solution security verification during operation) to meet one or more given security levels. These steps can be performed by the engineering system ES itself, or any of the receiving tools VT, CT, MT.

Referring to (c): The provided security attributes, descriptions and/or automation component configurations ACC1,...,ACCn can then be provided to receiving tools VT, CT, MT such as configuration tools CT, verification tools VT, or monitoring tools MT, preferably through standardized communication exchanges and data formats to allow more efficient and secure configuration, monitoring and verification of the configuration, especially the security configuration, of the solution. For example the engineering system ES sends the generated security data SD for the automation project PRJ to a receiving tool VT, CT, MT that uses them. The receiving tools VT, CT, MT also could be configured to retrieve data from the engineering system in predefined intervals, to verify security, to monitor changes and further relevant information. Exchange of the data can also be based on the extended standardized component description formats as described above, or can use other data formats.

Referring to (d): The security data can be rolled out to the solution components, the automation components C1,...,Cn, by the configuration tool CT, e.g. after they were verified and/or monitored by the verification tool VT and/or monitoring tool MT. The configuration tool CT can be part of the engineering system ES or its functionality can be integrated into the engineering system ES. The receiving tool VT, CT, MT could be, for instance, a verification tool VT that loads the security data per security zone or for the whole system, and verifies the correct implementation (i.e., whether the list of actually scanned/audited open ports in each zone of the solution is equal to the security data received from the project tool).

An alternative or addition to (d) could be that the receiving tool VT, CT, MT is a configuration tool CT that performs secure configuration of solution components, in this case the automation components C1,...,Cn, based on the security parameters SP and their settings S1,...,Sn received from the project tool, the engineering system ES. For example, the receiving tool VT, CT, MT interprets the security data SD received and converts it into SNMP MIB formatted data to exchange security data with individual components (e.g., to deactivate unneeded communication ports and network functions). Alternatives to SNMP MIB include security data SD exchange based on OPC-UA, or the Constrained Application Protocol (CoAP).

The receiving tool VT, CT, MT could be a monitoring tool MT that transfers the received information, e.g., into COAP, to observer resources on the solution components according to RFC7641.

Referring to (e): The receiving tools VT, CT, MT can create and provide reports on configuration, verification or verification results back to the project tool ES to allow further optimization of solution security configuration data ACC1,...,ACCn and their security parameter settings S1,...,Sn and/or the automation component description data CDD. This allows an even deeper integration of security data SP and S1,...,Sn into the engineering of automation projects PRJ. In a later step, the receiving tool VT, CT, MT can provide configuration or verification results to the engineering system ES, to allow further optimization of security data SD or automated reporting of verification results and detected deviations.

Referring to (f): the dashed arrow f indicates possible further embodiments that allow the engineering system ES to directly communicate with the automation components C1,...,Cn. The arrow tips are directed in both directions to show that the engineering system ES can directly configure the automation components. If necessary the automation components C1,...,Cn also can directly communicate with the engineering system ES and for example request updates for functionality as well as security or the like. Using standardized data formats according to the current invention including security parameters SP simplifies the communication and enriches the automation system with a higher security.

Referring to (g): the dashed arrow g indicates possible further embodiments, which allow the receiving tools VT, CT, MT to directly access the automation component description data CDD. This includes but is not limited to retrieve security and/or functionality parameters SP, FP, verify the engineering system ES results created and/or received under (c) and/or the receiving tools VT, CT, MT providing additional data to enhance the automation component description data CDD. A verification tool VT for example can provide verification results of predefined configurations and store them in the automation component description data, so that similar or identical configurations do not have to be verified again. A configuration tool CT could provide data about how often and to what extent certain automation component configurations ACC1 have been provided and if they were successfully deployed in the field. A monitoring tool MT can provide data from live automation systems, possible failures, running times, maintenance requirements and more to enrich the automation component description data CDD.

An implementation example of the above can be the allowed TCP/UDP communication ports in an automation project PRJ. A typical part of security configuration is the configuration of communication protocols per component (i.e., open TCP or UDP ports at given IP addresses of network components) such that only allowed ports are open and can be reached via the network. These configurations can be represented in security parameters SP and their respective security parameter settings S1,...,Sn.

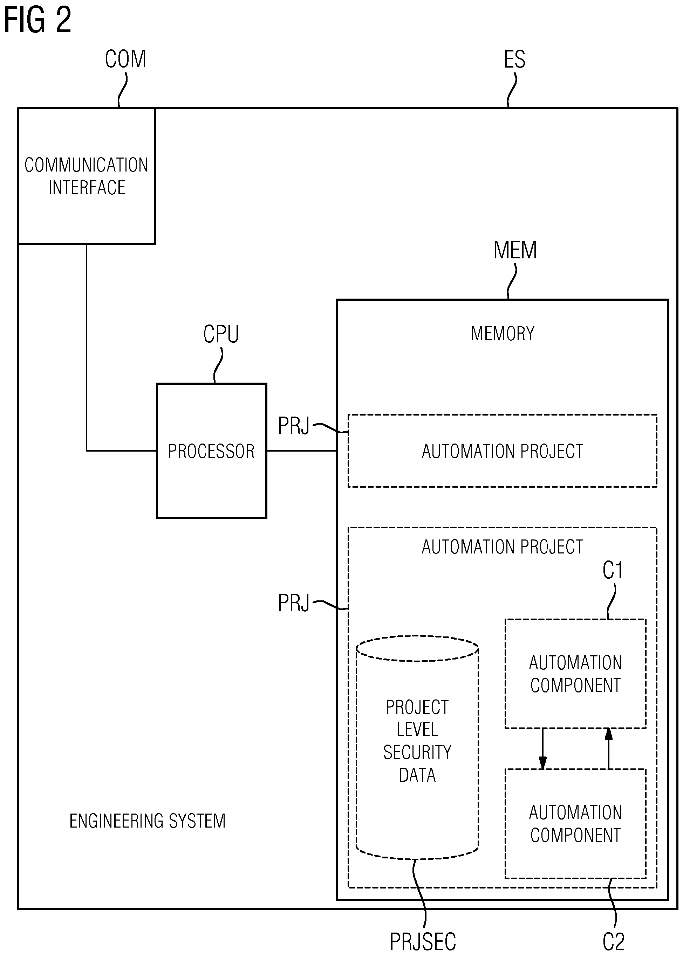

FIG 2 shows an engineering system ES in greater detail. In this embodiment the engineering system ES comprises a processor CPU and a communication interface COM as well as a memory MEM. The memory MEM is divided into multiple parts and can be realized is a physical data carrier such a hard disk drive or solid-state drive or also could be a central or decentral server infrastructure. The memory could also be implemented in the form of RAM. Indicated by solid horizontal lines, the memory MEM is divided into multiple parts that can be separated from each other on a physical or virtual level. As an example the memory contains two automation projects PRJ. The upper automation project PRJ could be an older project that is still stored in the memory MEM of the engineering system ES.

Indicated by the shown contents, the lower automation project PRJ is currently loaded and contains project level security data PRJSEC as well as models of two automation components C1, C2. The processor CPU is designed to execute code to provide automation component configurations ACC1,...,ACCn (not shown in this FIG) for the automation components C1,C2 of the currently loaded industrial automation project PRJ. The code can be provided as a computer program product comprising computer program code for executing the method according the current invention. The processor CPU can be a single processor of a standalone PC, a multi-processor platform, a programmable logic controller, a virtual processor in a server processing farm and other processors or computing infrastructures capable of executing the code.

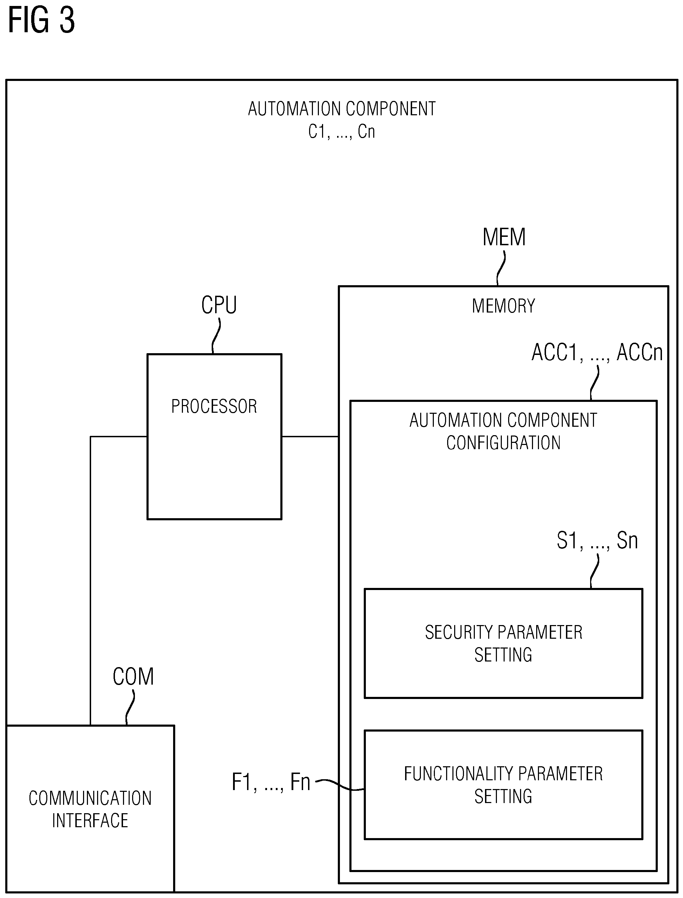

FIG 3 shows an automation component C1. The automation component C1 comprises a processor CPU, a communication interface COM and a memory MEM and N is an example for a hardware-based automation component. Automation components include but are not limited to: programmable logic controllers (PLCs), I/O modules, industrial communication devices, industrial networking components, sensors, actors, drives and other industrial devices commonly used in the process or automation industry. Software components which share hardware with other components are also configurable by the method according to the invention and/or the engineering system ES and/or a configuration tool CT. Usually an automation project comprises a PLC, a number of I/O modules that can communicate with the PLC over an industrial communication standard, some sensors and some actors that communicate with each other and/or the PLC. All or some of them can be provided with automation component configurations ACC1,...,ACCn via the method according to the invention that is proposed herein. This list is not exhaustive and can be amended by adding or removing automation components C1,...,Cn respectively.

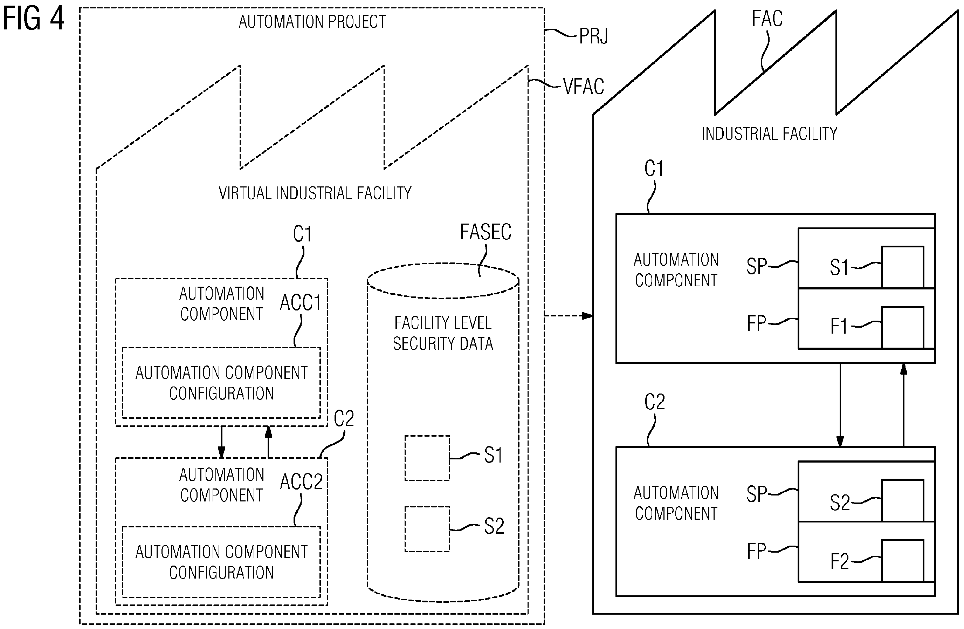

FIG 4 shows an automation project PRJ in relation with an industrial facility FAC. The industrial facility FAC to the right displays a very much simplified example of an automation project limited to a single industrial facility FAC and its to automation components C1, C2. On the left an automation project PRJ can be seen, comprising virtual representations of the industrial facility VFAC, models of the automation components C1, C2, including pre-engineered automation component configurations ACC1, ACC2, and a facility level security data FESEC. In this case the facility level security data FESEC can be equal to a project level security data PRJSEC because only this one facility FAC has to be configured/provided with automation component configurations ACC1, ACC2. Facility level security data FESEC can be provided with the same method additional or alternative according to the current invention and enables the same benefits on the facility level as the security data does on a project level.

The automation component configurations ACC1, ACC2 each can be provided by a method according to the invention, e.g. by an engineering system ES not shown here. They comprise functionality and security parameters FP, SP including their settings F1, F2, S1, S2. In the automation components C1, C2 employed in the industrial facility FAC the settings are depicted each in the respective component. For example the automation components C1 can be a PLC that has a simple motion program as a functionality parameter F1 with a number of security parameters, such as an internal encryption of the data processed by the PLC. This encryption for example could be the security parameter setting S1. The automation component C2 could be a motor integrated drive controller that is controlled by the PLC C1, which as a functionality parameter FP can rotate and its functionality parameter setting F1 is configured to rotate upon a signal by the PLC. In this case the security parameter setting S2 could be the presence of a certificate, allowing encrypted communication between the automation components C1 and C2. The two security parameter settings S1, S2 are also depicted in the facility level security data FASEC where they can be monitored, verified and if needed also be provided in a newer version to the actual facility FAC and its automation components C1, C2 as an update for security parameters SP.

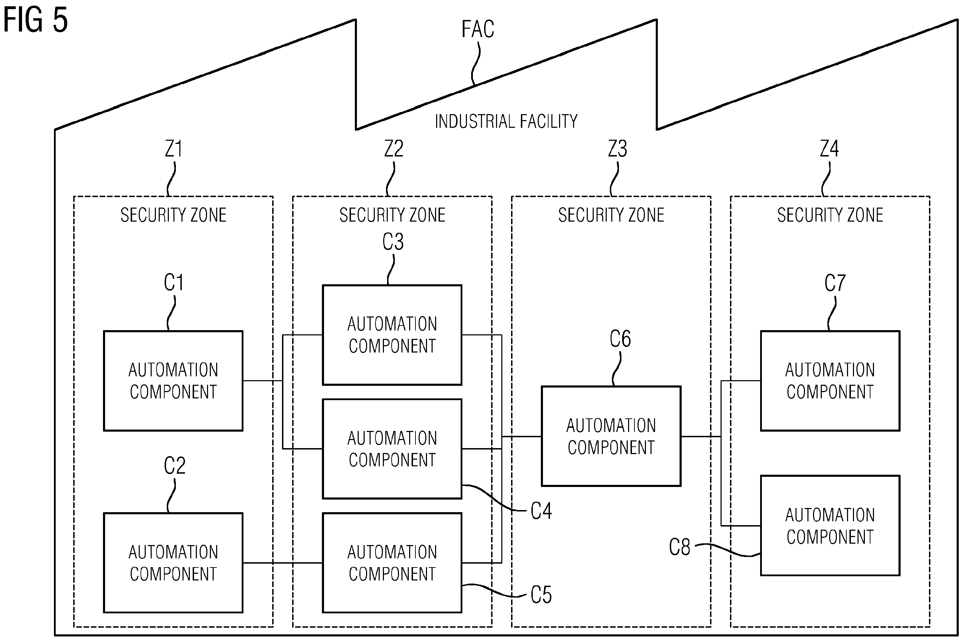

FIG 5 shows an industrial facility FAC, comprising eight different automation components C1,...,C8 that are divided into multiple security zones Z1, Z2, Z3. The security zones Z1, Z2, Z3 are defined by the need for security measures in a certain area in the automation system. In this example there the three security zones Z1, Z2, Z3 each corresponding to a security level required. Security zone Z1 could be a low security zone which includes access for logistics companies and other contractors. This low security zone Z1 therefore should not contain any sensitive data, sensitive machines or processes.

The medium security zone Z2 could comprise a certain amount of little sensitive data or processes which is regularly the case in production facilities.

The third and high-security zone Z3 could then comprise strictly confidential information such as the certification processes for electronic products or the recipes for chemical or other process industry products. In such a high level security zone Z3 secret keys for certificates could be deployed to automation devices.

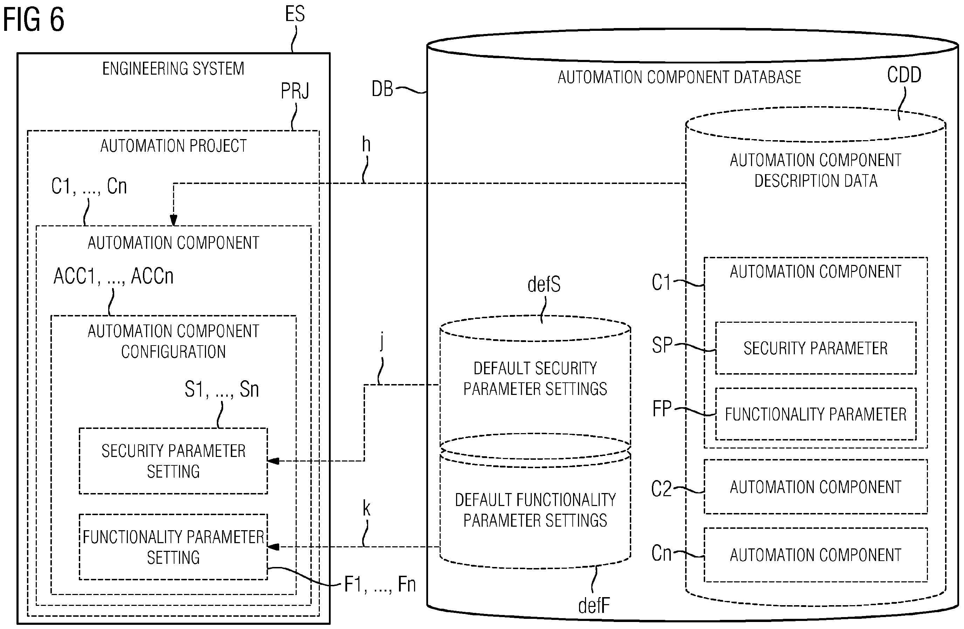

FIG 6 shows an automation component database DB in interaction with an engineering system ES. Automation component databases DB can be provided in the form of automation component libraries as known form of functionality parameters from current engineering systems ES. The invention now enhances the automation component description data CDD with security parameters SP for and preferably will for all automation components C1,...,Cn. Also according to a further embodiment of the invention default security parameter settings defS are also provided as default functionality parameters defF.

Referring to (h): the engineering system ES can retrieve or receive automation component data CDD for automation components C1,...,Cn that are to be used in the automation project. The engineering system ES can also enhance the automation component data CDD that it receives from the automation component database DB itself or by user input. This is especially helpful when automation components C1,...,Cn have to be configured that are very similar to each other and automation component data CDD is available only for a similar component.

Referring to (j): the automation component database DB further provides default security parameter settings defS. The engineering system ES can automatically receive or retrieve the default security parameter settings defS. This can happen initiated by a manual input or automatically, e.g. by an automated security wizard provided by the engineering system ES to ensure a high level of security automatically when engineering automation projects PRJ. At least parts of the default security parameter settings defS can be part of the automation component description data CDD. Providing default security parameter settings defS improves the level of security achieved significantly when rolling out a security concept in an automation project PRJ. Furthermore it is possible that automation components C1,...,Cn that have not been provided with a security parameter setting S1,...,Sn yet are highlighted in the engineering system ES and default security parameter settings are proposed to the user or even automatically applied.

Referring to (k): the automation component database DB further provides default functionality parameter settings defF. The default functionality parameter settings defF can be functions of automation components C1,...,Cn that are often used and therefore are easily deployable, when default components are used. Examples are standard movement patterns for motion controllers, sensors evaluation components and further control (open and closed loop) components. It is possible that certain functionality parameter F1,...,Fn settings are in some cases always linked with a default security parameter setting defS. Such a default security parameter setting defS can be proposed to the user or automatically implemented by the engineering system to ensure security where it is needed.

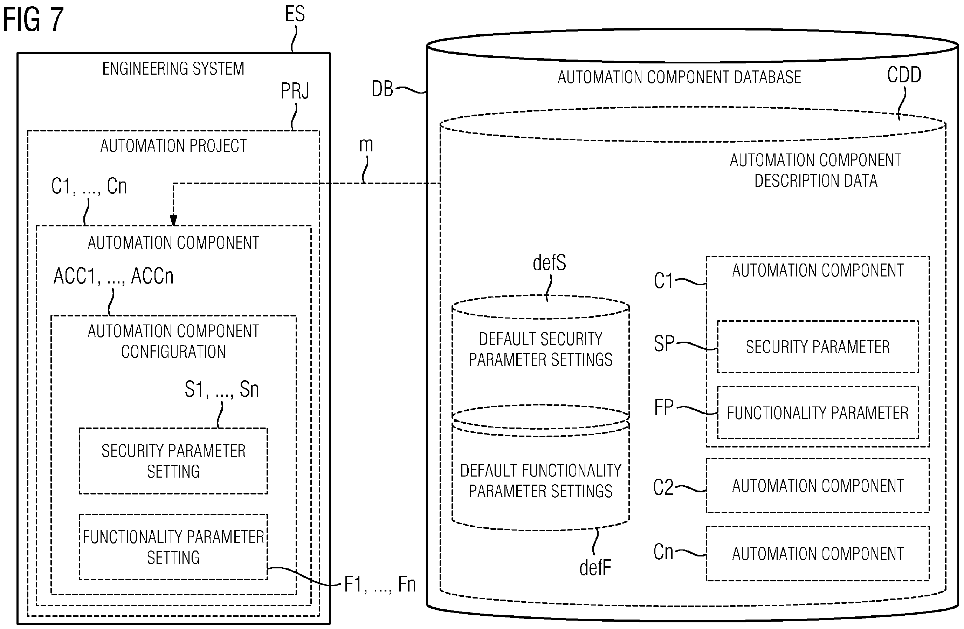

FIG 7 shows an automation component database DB similar to the one of FIG 6. It shows default security parameter settings defS and default functionality parameter settings defF as part of the automation component description data CDD. This can be the case for automation component related but not automation component specific data. For example basic certificates can be provided for all automation components.

Referring to (m): the default parameter settings defF, defS can be provided by the automation database DB combined with the automation component description data CDD for components usually required in an automation project PRj. The engineering system ES could also initiate a request for certain automation components with certain default settings defF, defS already applied.

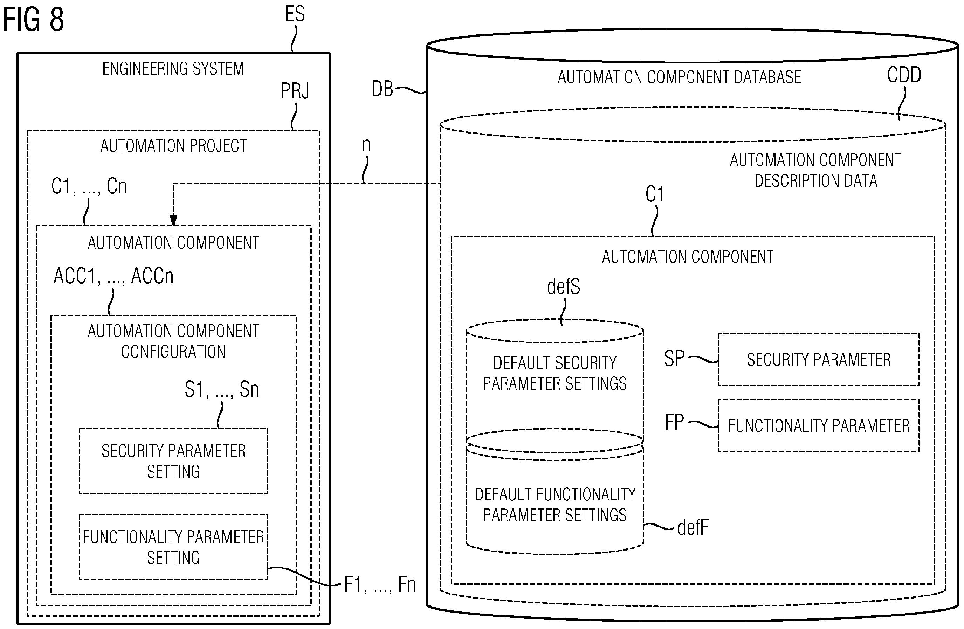

FIG 8 shows another automation component database DB similar to the ones of FIG 6 and 7. In this case a set of default security parameter settings defS and default functionality parameter settings defF is provided by the automation component database DB for an automation component C1. For example a memory encryption can be enabled by standard as a default security parameter setting defS. Certain automation components, such as so called edge devices, that have a connection to an internal network as well as an external network - such as the internet - may have a wide set of default security parameter settings. For example all http access can be blocked and an https access could be enforced. Also certain data packets/telegrams may be filtered and/or blocked completely. Those settings can be provided as default parameter settings defS or can be part of engineering the automation project PRJ.

Referring to (n): In this embodiment a completely preconfigured standardized building block for a certain device - in this case the automation component C1 - can be requested by the engineering system ES or provided by the automation database DB to the engineering system. This ensures a simple configuration for standard use cases, such as securely controlling a process or a drive system - while ensuring a high level of security for the whole automation project PRJ.

All the variants shown in FIG 6, 7 and 8 can be combined with each other in any way, with the possibility to combine default security parameter settings defS and/or default functionality parameter settings defF in any one or more of the positions shown in the FIG 6, 7 and 8. For example the default security parameter settings can be provided in the automation component database DB as well as in the automation component description data CDD and additionally for each of the components C1, C2, Cn.

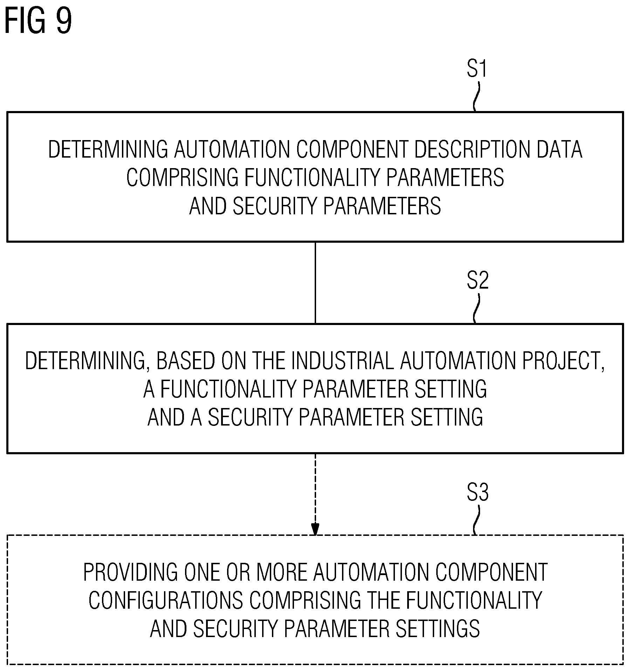

FIG 9 shows three steps of an embodiment of the method according to the invention. This includes:
- a first step S1 of determining automation component description data CDD comprising one or more functionality parameters FP for configuring functionality of the one or more automation components C1,...,Cn and one or more security parameters SP for configuring security functions of the one or more automation components C1,...,Cn;
- followed by a second step S2 of determining, based on the industrial automation project PRJ, one or more functionality parameter settings F1,...,Fn for the one or more functionality parameters FP and one or more security parameter settings S1,...,Sn for the one or more security parameters SP and
- optionally (indicated by dashed lines) followed by a third step of providing S3 one or more automation component configurations ACC1,...,ACCn comprising the determined functionality parameter settings F1,...,Fn and the determined security parameter settings S1,...,Sn.

Furthermore step S3 may be based on steps S1 and/or S2. Hence according to another aspect the method may only consist of step S3.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Method to provide automation component configurations (ACC1,...,ACCn) for automation components (C1,...,Cn) of an industrial automation project (PRJ), the method comprising:
• a first step (S1) of determining automation component description data (CDD) comprising one or more functionality parameters (FP) for configuring functionality of the one or more automation components (C1,...,Cn) and one or more security parameters (SP) for configuring security functions of the one or more automation components (C1,...,Cn) and
• a second step (S2) of determining, based on the industrial automation project (PRJ), a functionality parameter setting (F1,...,Fn) for the one or more functionality parameters (FP) and a security parameter setting (S1,...,Sn) for the one or more security parameters (SP).

2. Method according to claim 1, further comprising a third step of providing (S3) one or more automation component configurations (ACC1,...,ACCn) comprising the determined functionality parameter settings (F1,...,Fn) and the determined security parameter settings (S1,...,Sn).

3. Method according to claim 1 or 2, wherein the first step (S1) further comprises retrieving a default functionality parameter setting (defF) and/or a default security parameter setting (defS) and the second step (S2) of determining further being based on the default functionality parameter setting (defF) and/or the default security parameter setting (defS).

4. Method according to any one of the preceding claims, further comprising the step of combining the determined security parameter settings (S1,...,Sn) to a set of project-level security data (PRJsec) for the respective automation project (PRJ).

5. Method according to any one of the preceding claims, further comprising the step of providing the automation component configurations (ACC1,...,ACCn) and/or project-level security data (PRJSEC) to a receiving tool (CT, VT, MT), preferably a configuration tool (CT), a verification tool (VT) and/or a monitoring tool (MT).

6. Method according to any one of the preceding claims, further comprising the step of providing an automation component configuration (ACC1,...,ACCn) for each automation component (C1,...,Cn) or each group of related automation components (C1,...,Cn).

7. Method according to any one of the preceding claims, wherein the second step of determining the security parameter setting (S1,...,Sn) is based on at least a default security parameter setting (defS).

8. Method according to any one of the preceding claims, further comprising the step of evaluating the set of project-level security data (PRJsec) of the automation project (PRJ) according to definable security criteria.

9. Method according to any one of the preceding claims, further comprising the step of optimizing the set of project-level security data (PRJsec) according to a definable project security level (SLVL) and/or definable security zones (Z1,...,Zn).

10. Method according to any one of the preceding claims, structuring the automation component description data (COMPdata) are according to a format comprising at least functionality data and security data (SD).

11. Method according to any one of the preceding claims, enriching the automation component description data (DD) with at least parts of the automation component configurations (ACC1,...,ACCn) .

12. Engineering system (ES) for providing one or more automation component configurations (ACC1,...,ACCn) for an industrial automation project (PRJ) by a method according to any one of the preceding claims, the engineering system (ES) being configured and/or operative to:
• in a first step (S1) determine automation component description data (CDD) comprising one or more functionality parameters (FP) for configuring functionality (F) of the one or more automation components (C1,...,Cn) and one or more security parameters (SP) for configuring security functions (FS) of the one or more automation components (C1,...,Cn) and
• in a second step (S2) determine, based on the industrial automation project (PRJ), a functionality parameter setting (F1,...,Fn) for the one or more functionality parameters (FP) and a security parameter setting (S1,...,Sn) for the one or more security parameters (SP).

13. Automation component (C1,...,Cn) being configured and/or operative to:
• receiving and/or retrieving automation component configurations (ACC1,...,ACCn) provided by a method according to one of the claims 1 - 11 and to
• applying functionality parameter settings (F1,...,Fn) and security parameter settings (S1,...,Sn) obtained from the received/retrieved automation component configuration (ACC1,...,ACCn) .

14. Automation component database (DB) providing at least one or more
• automation component description data (CDD) and/or
• default functionality parameters (defF) and/or
• default security parameters (defS)
for use in a method according to one of the claims 1 - 11.

15. Receiving tool (CT, VT, MT) operative to receive and/or retrieve automation component configurations (ACC1,...,ACCn) and/or project-level security data (PRJsec) provided by a method according to one of the claims 1 - 11, and to process the automation component configurations (ACC1,...,ACCn) and/or project-level security data (PRJsec).

16. Receiving tool (CT, VT, MT) according to claim 15 operative to provide a result of processing one or more of the automation component configurations (ACC1,...,ACCn) and/or project-level security data (PRJsec) to an engineering system (ES) .

17. A computer program comprising instructions which, when the program is executed by a computer, cause the computer to provide automation component configurations (ACC1,...,ACCn) for automation components (C1,...,Cn) of an industrial automation project (PRJ), and further to carry out the method according to any of the claims 1 - 11.

18. A data carrier signal carrying the computer program of claim 17.
